Europäisches Patentamt

European Patent Office

Office européen des brevets

(11) Publication number: **0 272 942 B1**

# EUROPEAN PATENT SPECIFICATION

(45) Date of publication of patent specification: **30.09.92**    (51) Int. Cl.⁵: **G01P 5/00**

(21) Application number: **87311425.0**

(22) Date of filing: **23.12.87**

(54) **Speed measurement device.**

(30) Priority: **23.12.86 GB 8630693**

(43) Date of publication of application:
**29.06.88 Bulletin 88/26**

(45) Publication of the grant of the patent:
**30.09.92 Bulletin 92/40**

(84) Designated Contracting States:
**DE FR GB IT SE**

(56) References cited:
**FR-A- 2 260 229**
**GB-A- 2 187 839**
**US-A- 3 729 993**

(73) Proprietor: **Brookes and Gatehouse Limited
Bath Road
Lymington Hampshire S041 9YP(GB)**

(72) Inventor: **Sancha, Nicholas
81 Clontarf Street
Perth, 6020(AU)**

(74) Representative: **Greene-Kelly, James Patrick
et al
Marks & Clerk 57-60 Lincoln's Inn Fields
London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a speed measurement device particularly but not exclusively for measuring the speed of a water craft.

A ship speed indicator has been proposed in US 3898878 (Stallworth & Hartley) e.g as shown if figure 1, for measuring ship's speed by calculating the time taken for acoustic signals to travel along an acoustic path (A) between two projector-receiver modules (PM1, PM2), each containing a transmitter and a receiver, positioned at pre-selected points relative to the ship's hull. The logic and display module (LDM) located in the interior of the ship is connected between the projector-receiver modules. Measurements are made of the time taken by acoustic signals to travel from the projector of one of the modules to the receiver of the other and vice versa. From the difference between the selected points and the difference in time taken for the acoustic signal to travel in the opposed directions between the modules, the speed of the ship may be derived.

It is a disadvantage of the device disclosed in US 3898878 that it is not suitable for use on small ships and boats at high speeds due to the low frequencey of acoustic signal used in the device. The frequency of acoustic signal is chosen to be 100 KHz, which allows signal analysis to be conveniently performed. However, in order to gain the required resolution at this frequency, a large distance is required between the modules. Also, as the signal propagation path is long, the signals received by the respective modules are prone to interference due to aeration and turbulence.

US-A-3, 729, 993 discloses a speed measuring device for measuring the speed of a water craft comprising first and second transducer means mounted on the water craft below the water line thereof, so as to face one another across an acoustic path. Transmitter means energize a selected transducer means for transmission of an acoustic pulse signal along the acoustic path. Receiver means process the acoustic pulse signal as received at the non-selected transducer means and determine the arrival time of the acoustic pulse signal. Control and processing means control the transmitter means to change the selection of the transducer means so as to change the direction of the transmission and are responsive to the transmission means and the receiver means for processing the transit time of acoustic pulse signals in both directions between the first and second transducer means and derive therefrom a signal indicative of the speed of the craft.

According to the invention, there is provided a speed measuring device for measuring the speed of a water craft comprising first and second transducer means mountable on the water craft below the water line thereof so as to face one another across an acoustic path, transmitter means for generating a plurality of consecutive acoustic pulse signals in a given direction with the arrival of an acoustic pulse signal triggering the transmission of the next acoustic pulse signal, and energising a selected transducer means for transmission of these acoustic pulse signals along the acoustic path, receiver means for processing the acoustic pulse signals as received at the non-selected transducer means and for determining the arrival time of said acoustic pulse signals, control and processing means for controlling the transmitter means to change the selection of the transducer means so as to change the direction of said transmission and responsive to the transmission means and receiver means for processing the transit time of acoustic pulse signals in both directions between the first and second transducer means for deriving a signal indicative of the speed of the craft, characterized in that the control and processing means measures the overall transit time of said plurality of acoustic pulse signals, and in that the number of consecutively generated acoustic pulses, under control of the control and processing means is variable according to the water conditions.

Preferably the speed measuring device comprises an automatic gain control circuit for receiving a discontinuous oscillating signal, the circuit comprising comparison means for comparing the signal with first and second thresholds having a fixed relation, and means for controlling the gain of the oscillating signal so that the first threshold corresponds to a first predetermined point of the received signal whereby the second threshold responds to a second predetermined point of the received signal, said second predetermined point defining a timing marker for said signal and wherein said first and second predetermined points occur on adjacent half cycles of the oscillating signal, the first predetermined point being the peak value of one of said half cycles and said second predetermined point being chosen to occur on the half cycle of the waveform which exhibits the largest amplitude change relative to the previous like sensed half cycle or waveform perturbation of the discontinuous signal.

Preferably the transmitter means comprises a transmission circuit comprising a first terminal having a supply voltage at a first level, a second terminal having a supply voltage at a second level, means for limiting the supply voltage applied to the transducer from said first level to a third level between said first and second levels and switch means for switching the voltage applied to said transducer from said third level to said second level.

An embodiment of the invention will now be described, by way of example, with reference to the accompanying drawings in which:

Figure 1 illustrates a prior art speed measurement device.

Figure 2 shows a sectional view of a transducer mounting assembly for use with the described embodiment of the invention.

Figure 3 is a block diagram illustrating an embodiment of the invention.

Figure 4 is a flow-chart illustrating the gain control routine of the embodiment of figure 3.

Figure 5 is a timing diagram illustrating an automatic gain control process using the routine of figure 3.

Figure 6 is a timing diagram showing part of a speed measurement cycle of the embodiment of figure 3.

Figure 7 is a flow chart illustrating the data gathering routine of the embodiment of figure 3.

Figure 8 is a flow chart illustrating the sing-around transmission adjustment routine of the embodiment of figure 3.

The mode of operation of the described embodiment relies of a precise measurement of the transit time of a high frequency acoustic pulse, in both directions, between two piezoelectric transducers T1, T2 spaced substantially in the direction of travel of a vessel.

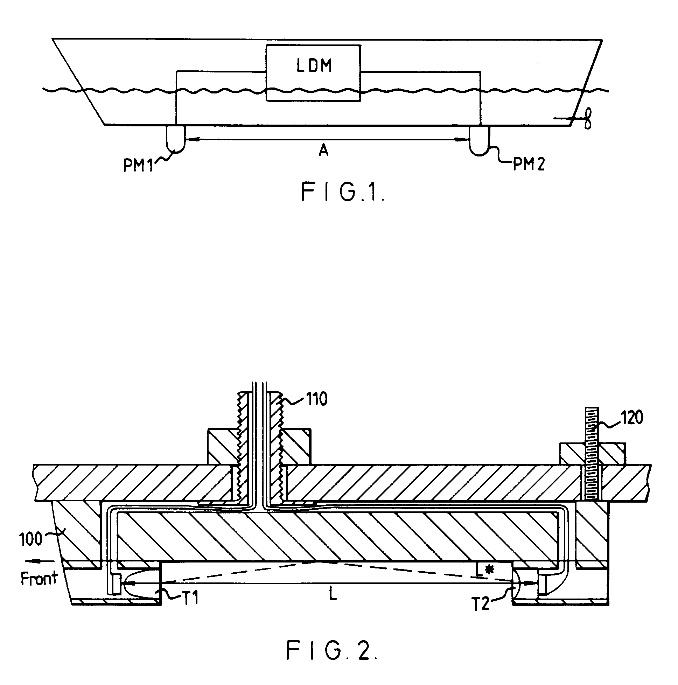

With reference to figure 2, transducers T1, T2 which act both as transmitters and receivers are shown mounted in a module 100, which is attached via connectors 110, 120 to the hull of a said vessel. The module 100 is shaped and positioned so that the transducers are spaced one from another across an acoustically quiet transmission path of length L. Use of the mounting 100 allows the transmission length L to be set at the manufacturing stage (it is crucial that this length be known for accurate calculation of speed). Alternatively, the transducers may be mounted in separate mountings shaped and positioned so the transducers are again spaced from one another across an acoustically quiet transmission path. and the distance L subsequently measured.

If the transit times for pulse is in both directions between the transducers T1, T2 are measured, the vessel speed is given by:

$$\text{Vessel Speed} = \frac{L\ (t1 - t2)}{2\ t1.\ t2}$$

where
L = distance between transducers
t1 = transmission time in forward direction

t2 = transmission time in backward direction.

In order to minimise the effects of aeration and bubble interference, it is preferable to make the transmission path length L as small as possible and a distance of approximately 200 mm is preferred.

However, in order to provide an acceptable resolution of speed, to, for example, 0.01 knot, time resolution for the transit time of the pulses needs to be of the order of $10^{-7}$-$10^{-8}$ seconds at least. A highly accurate timing marker in the received pulse train therefore needs to be established.

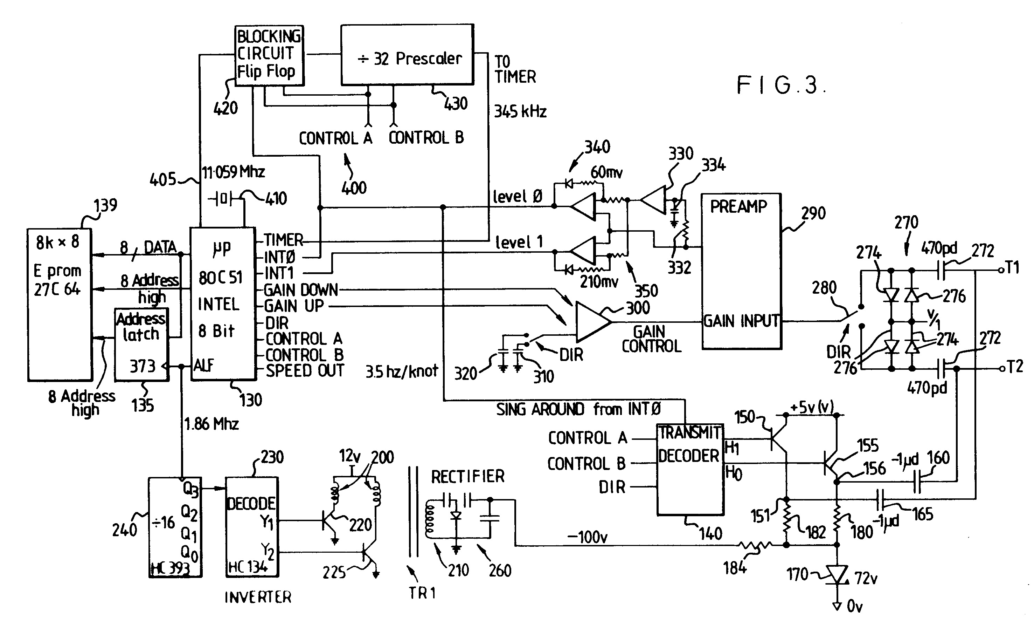

With reference to figure 3, a block diagram illustrating an embodiment of the speed measurement device of the invention is shown.

The speed measurement device is driven and controlled by a micro processor 130, for example an Intel 80C51. The processor 130 is coupled via data and address buses and an address latch 135 to an 8K x 8 EPROM 139 in which the operation programs for the processor are stored. The processor 130 includes 9 I/O ports which are labelled TIMER, INTO, INT1, GAIN DOWN, GAIN UP, DIR, CONTROL A, CONTROL B and SPEED OUT, through which information and instructions are exchanged between the processor and the external hardware circuitry.

The hardware circuitry may conveniently be divided into transmitter and receiver sections which are common to both transducers T1, T2.

The transmitter circuitry includes a transmit decoder 140 which has inputs from the CONTROL A, CONTROL B and DIR ports of the processor and from the "SING AROUND FROM INTO" (SAFI) line. The decoder 140 includes two monostables, one for providing a short pulse (e.g 2$\mu$S). This pulse is generated in response to an enable signal on the CONTROL A line and a pulse transmission signal on either the CONTROL B line or from the SAFI input. In order to prevent multiple transmissions in response to the SAFI input a second monostable of a longer duration (20$\mu$S) is provided which triggers the first monostable and remains high for 20$\mu$S therafter thus inhibiting triggering of the first monostable after the first pulse on the SAFI line, for reasons to be discussed below.

The pulse from the first monostable is output on lines H1 or H0 depending on the state of the DIR input from micro processor 130 (which controls the direction of transmission). Lines H1, H0 are connected, respectively, to switch transistors 150, 155 which, when on, cause the voltage at points 151, 156 to rise from a strongly negative line supply voltage to approximately +5 volts, this pulse being fed via large blocking capacitors 160, 165 (e.g. 1$\mu$f)to transducers T2, T1. The supply line voltage is supplied at -100 volts via resistor network 180, 182, 184. However, a zener diode 170 is provided for reducing this voltage to -72 volts. The zener diode 170 is provided so that the transducers T1, T2 are always fed with a pulse of the same amplitude. If transmission pulses are fed in quick succession, it is possible that the transducers, which have a high capacitance, may not have recovered to the supply voltage of -100 volts. The presence of the zener diode 170 insures that the transducer voltage, after the pulse, is quickly brought back down to - 72 volts. It is necessary to also maintain the line voltage at - 100 volts so that the line voltage is pulled down quickly to the - 72 volt breakdown point, via the resistor network 180, 182, 184.

The -100 volt line voltage is derived from a battery voltage, for example 12 volts, by means of a transformer TR1 which is conveniently driven by the micro processor 130. The transformer includes a centre tap primary coil 200, to which a 12 volt battery voltage is applied and a secondary coil 210. The primary coil 200 is switched with a square wave input via transistors 220, 225, which are controlled by a decoder 230 which is fed with a 150 KHz square wave signal and provides complementary outputs Y1, Y0 to transistors 220, 230. This square wave signal is derived from the Address Latch Enable (ALE) line of the micro processor which has a square wave output of 1.84 MHz. This is divided by a ÷ 16 counter 240 to provide the square wave input at an acceptable frequency.

The secondary coil 210 provides the line voltage output via a rectifier 260.

Thus, the transducers T1 or T2 are provided with a high amplitude short duration pulse which excites the transducer and produces an acoustic wave through the water, which is received by the non-transmitting transducer, T2 or T1.

The receiver circuitry includes a protection circuit 270 for protecting the receiver circuitry from the transmitted signal. The protection circuit 270 includes, for each transducer T1, T2, a small value capacitor 272 (e.g. 470 pf) and a pair of back to back diodes 274, 276 connected to approximately half the supply voltage, V (V = + 5V). The protection circuit 270 particularly protects a CMOS switch 280 connected thereto, which is under control of the processor via the DIR instruction line, so that the receiver circuitry is only connected to the non-transmitting transducer. The output from the switch is connected to a pre-amplifier 290 which has a variable gain controlled by the processor 130 and also includes a broad band filter.

The pre-amplifier 290 is provided with gain control information via a gain control amplifier 300 which is supplied with gain control adjustment information from the processor via the GAIN DOWN and GAIN UP output ports. The absolute gain information is preset on capacitors 310, 320, one for each respective receiving transducer T1, T2. One capacitor 310, 320 is connected to the gain control amplifier 300 at any one time in accordance with the DIR signal from the processor 130. The output signal from the preamplifier 290 is fed to arm and trigger circuits 340, 350 which are set to have different initial arming threshold levels, e.g of 60 millivolts and 210 millivolts. The arm and trigger circuits 340, 350 produce a pulse which rises when the arming threshold level is reached and which falls on the next zero crossover. The signal from preamplifier 290 is also fed to a signal blocking amplifier circuit 330, 332, 334 which provides an average level from which the threshold levels of circuits 340, 350 are developed. The amplifier circuit 330, 332, 334 compensates for any drift in the preamplifier output signal. Arm and trigger circuit 340 provides an output designated LEVEL 0 which is used to provide the timing marker for measuring the time of receipt of the received pulse. This signal is fed to the INT0 input port of the micro processor and is also fed, via the SAFI branch to the transmit decoder 140. The output from arm and trigger circuit 350 provides an output designated LEVEL 1 which is fed to the INT1 input port of the micro processor 130 and is used for gain control adjustment.

The LEVEL 0 output from arm and trigger circuit 340 is also fed to timing circuitry 400, for measuring the time of arrival of the transmitted pulse. The timing circuitry includes an input 405 from the processor clock 410 which is fed via a blocking circuit flip flop 420 to a ÷ 32 prescaler 430 and back to the "TIMER" input port of the micro processor 130. In operation, the control signals CONTROL A and CONTROL B, in addition to enabling the transmission of an initial pulse, also deactuates the blocking circuit 420, thus allowing the signal from clock 410 to be input to prescaler 430 which divides the clock signals by thirty two and inputs the resulting lower frequency clock signal to the TIMER port. The prescaling of the clock signal is necessary to reduce the clock frequency to that which can be resolved by the processor logic. The number of transitions of the lower frequency signal input to the TIMER part is counted by the processor's internal counter. The change of state of the LEVEL 0 signal actuates the blocking circuit flip flop so that the effective count is stopped and a coarse time count may be obtained by the micro processor interogating its internal counter. However, the timing accuracy is significantly improved by interogating the remaining count in the ÷ 32 prescaler, using CONTROL A and CONTROL B as described below.

Operation of the speed device will now be described with reference to figures 3 to 5.

The basic mode of operation of the device is to send pulses in both directions and calculate the difference in transit times, as previously explained. In detail, the processor, under control of the software, performs a plurality of such measurements and then takes an average of all the cycles completed. In order to increase accuracy the circuit is controlled to "sing-around", that is a plurality of transmissions in one direction are made with the arrival of the previous transmission immediately triggering the sending of the next transmission. This technique allows far greater accuracy to be obtained as the summation of the plurality of transmissions, when divided by the number of transmissions allows the transit time to be resolved to a higher degree using the existing timing circuits, as small, unresolvable parts of a single transmission can accumulate to a resolvable amount. The number of "sing-around" times is controllable by the micro processor according to the water conditions as is described below but, for the purposes of initial illustration, it will be assumed that the number of sing-around times is four so that the processor generates four pulses in one direction, measuring the transit time for all four pulses together, followed by four pulses in the reverse direction.

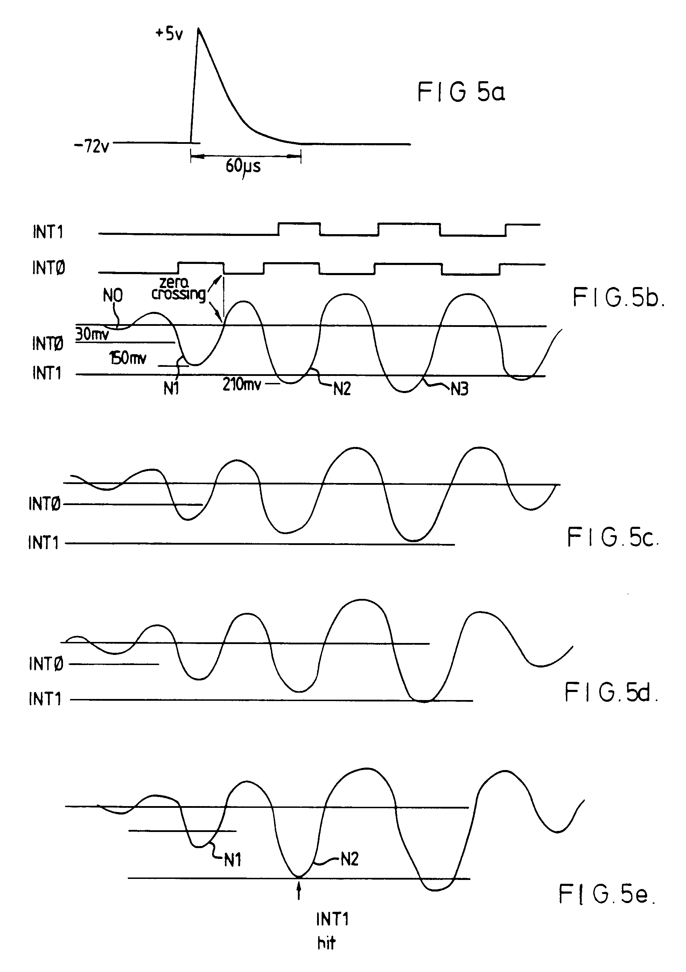

Before describing this operation, however, the automatic gain control operation of the circuit will be described. With reference to figure 5b, the form of signal as received at the non-transmitting transducer is shown. From comparison with figure 5a, which shows the transmitted signal (not on the same scale) it can be seen that the received signal is of quite different form. In order to measure accurately the transit time of the signal, it is necessary to measure accurately a particular point of the received wave form and the inventors have found that the most accurate measuring point is a threshold on the first significant negative half cycle (labelled N1 in figure 5b), with the precise timing being taken at the first zero crossing following this negative half cycle. The reason that this particular point is preferred is that the peak to peak difference between subsequent negative half cycles is not as great as between the initial perturbation in response to the transmitted signal (N0) and the first significant half cycle (N1). Also, disturbance due to other longer signal paths, e.g as indicated as $L^*$ in figure 2 can create ambiguity in the later part of the received signal, so an early identification of the received pulse is preferred. For accurate, repeatable measurements it is necessary to adjust the gain of the received signal to suit the threshold detecting circuitry.

When initially a gain control measurement, the processor 130 causes the CONTROL A line to go low and the CONTROL B line to go high, which actuates the first monostable in the transmit decoder 140, which in turn outputs a pulse from one of the transducers, e.g T1, in dependence upon the DIR signal. This pulse is then received at the other transducer T2 and the resulting signal, as for example shown in figure 5b, is input to the pre-amplifier 290. This signal is then fed via amplifier 330 to the arm and trigger circuits 340, 350. When the signal reaches the threshold level of circuit 340, a pulse on the INT0 line is developed which remains high until the first subsequent zero crossing, as shown in figure 5b. Circuit 350 performs a similar function but changes state on a much higher threshold, again as shown in figure 5b. The received signal level is adjusted so that the peak value of the second significant negative half cycle N2 is equal to threshold level of circuit 350. Due to the characteristics of the received signal and the relative difference between the threshold levels of circuits 340 and 350, the threshold level on the circuit 340, which is triggered by the first significant negative half cycle (N1) is then correctly scaled with reference to the incoming signal.

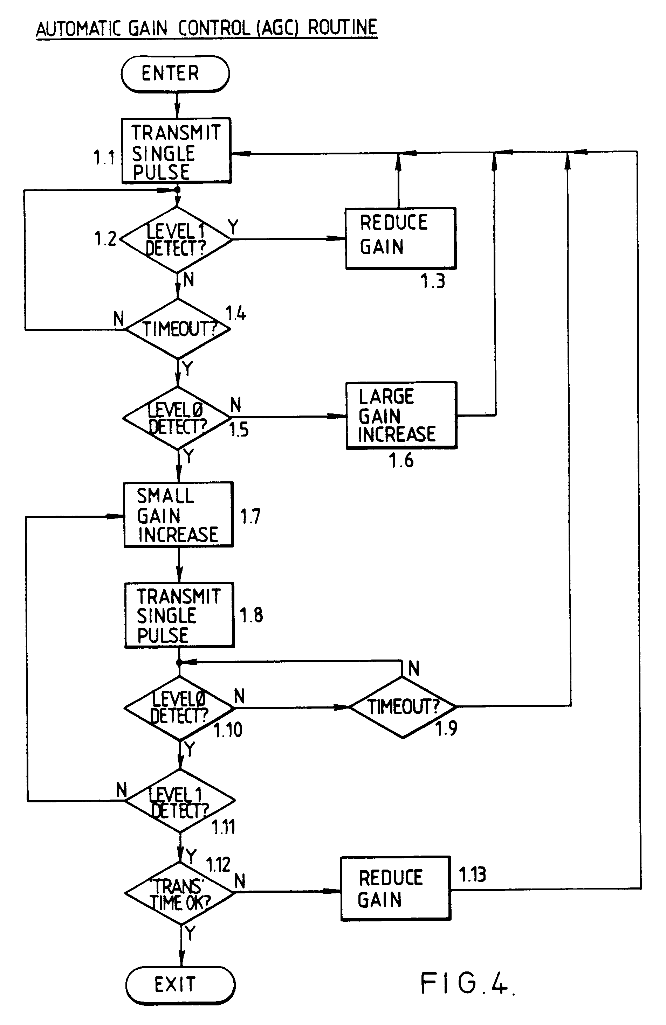

The routine used for effecting the gain adjustment is shown in figure 4. The processor initially outputs a pulse which produces, for example, a waveform as shown in figure 5b. On receipt of the pulse from the INT1 line, the processor decreases the gain of the pre-amplifier 290 by outputting a signal on the GAIN DOWN line (1.1, 1.2, 1.3). This new gain is stored in capacitor 310. A further pulse is then transmitted and the gain measured again. If an INT1 signal continues to be developed the processor continues to decrease the gain of the pre-amplifier, until an INT1 signal is not developed, as for example shown in figure 5c. (step 1.4). The gain is then increased using the GAIN UP output port until the INT1 level (LEVEL 1) is hit again, as shown in figure 5d. (steps 1.7, 1.8, 1.11). With reference to figure 5d, however, it can be seen that the INT1 level has hit the peak value of a different negative half cycle (half cycle N3). In order to determine accurately the level of cycle N2, the processor looks for the INT1 port to go high within a predetermined time window (at step 1.11), to be sure that the gain of the correct negative half cycle (N2) is being measured. When the processor has determined that this is the case, the transmission time is checked against a predefined lower limit. If this is not exceeded then noise is probably being picked up, so that gain is reduced (step 1-13) and the whole process repeated. Otherwise gain adjustment is complete. The relative magnitudes of the negative half cycles N1 and N2 have been found to remain fairly constant in adverse conditions so that once the gain is set accurately using the INT1 level, unambiguous identification of the first significant negative half cycle N1, by arm and trigger circuit 340, may be accurately made.

In the event of the gain being initially so low that the INT1 level is not reached, the INT0 threshold (LEVEL 0) is also checked and if this has not been reached, a large gain increase is made (step 1.6) and the process repeated. Also, if the INT0 level disappears in the gain increment loop, due to sudden adverse change in conditions, the gain may be coarsely readjusted through steps 1.9, 1.1-1.6.

As the amplitude of a signal can change rapidly due to changes in sea conditions for example salinity and aeration, the automatic gain control measurement is performed before each series of sing-around transmissions in either direction. Also, as the amplitude of the signal can differ from transmission in one direction to transmission in the other, gain values are stored for both directions, on capacitors 310, 320. Alternatively, a single capacitor may be used and the gain stored on the one capacitor changed as necessary before the transmissions in one direction or another.

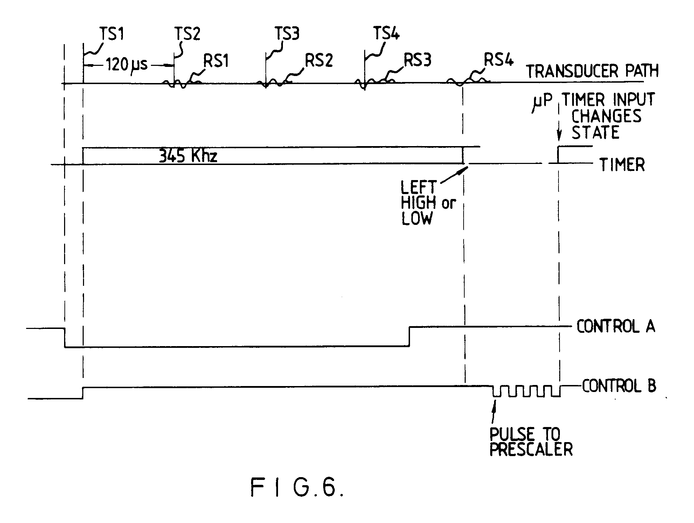

Following the automatic gain control, a transit time measurement may be made. With reference to figure 6, four sing-around cycles are illustrated. The number of sing-around cycles is chosen by the processor, which intiates transmission by raising the CONTROL B line and lowering CONTROL A line. The CONTROL A signal acts as an inhibit/enable line and will prevent operation of the transmission circuitry and will also enable the blocking flip flop 420 when raised. This signal therefore remains low for as long as pulses in one sing-around cycle are being output and goes high after the last but one pulse has been received as shown in figure 6, so that sing around transmission and a continual time count are made unitl receipt of the last transmitted pulse. CONTROL B intiates the transmission and when this signal goes high the first monostable of the transmit decoder 140 outputs the first pulse. CONTROL B remains high until the last sing-around transmission has been received. The CONTROL A and CONTROL B signals together deactuate the blocking flip flop 420, so that the TIMER port of the processor 130 starts to receive clocking pulses from prescaler 430.

When the first pulse is received by the receiving transducer, it is fed through the protection circuit 270 to the pre-amplifier 290, which amplifies the signal. This is then fed to the arm and trigger circuit 340, which will produce a high level at the INT0 input. The change in state of the INT0 line will alert the processor 130 that the first pulse has been received (further INT0 level changes after the first LEVEL 0 pulse are ignored by the processor 130 for $60 \mu S$) and will also cause the transmission decoder 140 to output a further pulse through the SAFI branch. This signal activates the second monostable which immediately triggers the first monostable to output a further pulse. The second monostable provides an output which inhibits further signals on the SAFI line developing further transmit pulses. With reference to figure 5b, it can be seen that the INT0 signal continues changing state after its first transition and the second monostable inhibits these additional transitions from generating further transmit pulses and will continue to be retriggered for as long as the INT0 signal continues to change state.

Thus, the received signal triggers another transmission signal which in turn will trigger a further transmission signal, on reception, and so on until the last but one transmitted signal is received, after which time the processor raises the CONTROL A line to inhibit further transmission and enable the blocking flip flop 420. When the final transmitted signal is received (received signal R4 in the example shown in figure 6) the INT0 signal, actuates the enabled blocking circuit flip-flop 420 to block the clock input to the prescaler 430, thus stopping the timer output to the micro processor 130. The pulses input to the TIMER input are accumulated by the internal counter of the micro processor 130 and give a coarse value for the transit time for the four sing around transmissions.

However, it will appreciated that the ÷ 32 prescaler 430 will also have a count value equivalent to the number of clock cycles from clock 410 which have not resulted in a change of state on the output from prescaler 430 to the TIMER input of the micro processor 130. In order to extract this time information, the CONTROL B line then provides a pulsed input to the prescaler 430. The number of pulses necessary for the TIMER input to change state and go low is counted, the difference between the number of pulses and thirty two being equal to the residual count remaining in the prescaler. Thus, using this technique the time resolution of the circuit can be improved to that of the clock frequency of the micro processor clock 410.

After this time has been measured, the direction of transmission is reversed and gain control performed for transmitter T2 as the transmitting transducer. A sing-around transmission is then again performed and a further time for transmission in the reverse direction is obtained. The transit times for the transmissions may then be averaged and the speed calculated in accordance with equation 1. A signal is then output on the speed out line which is proportional to speed. For example a signal having a frequency of 3.4 Hz per knot may be used, this signal being sent to a display module in the vessel.

The above description of the calculation of the operation of the speed sensing device was illustrated for four sing-around transmissions in both directions. However, as previously explained it is desirable to increase the number of sing-around transmissions to as large a number as possible, for greatest accuracy. The disadvantage in increasing the number of sing-around transmissions is that in conditions of high aeration and turbulence, the signal path may be interrupted regularly so that a signal may be completely lost at some point during the speed measurement transmissions, so that with a large number of sing-around transmissions it may be impossible to obtain a valid transit time.

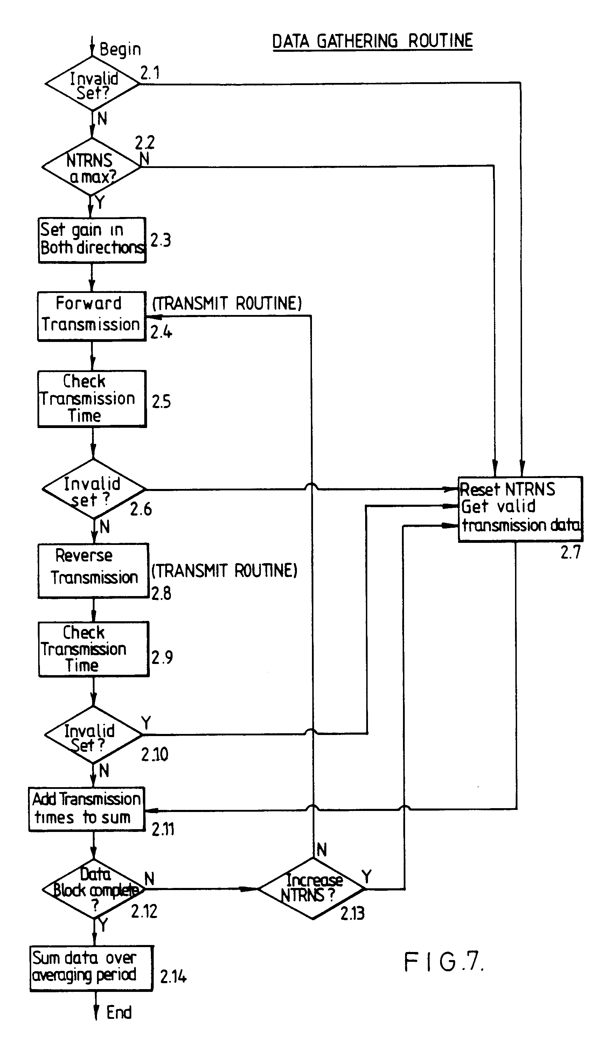

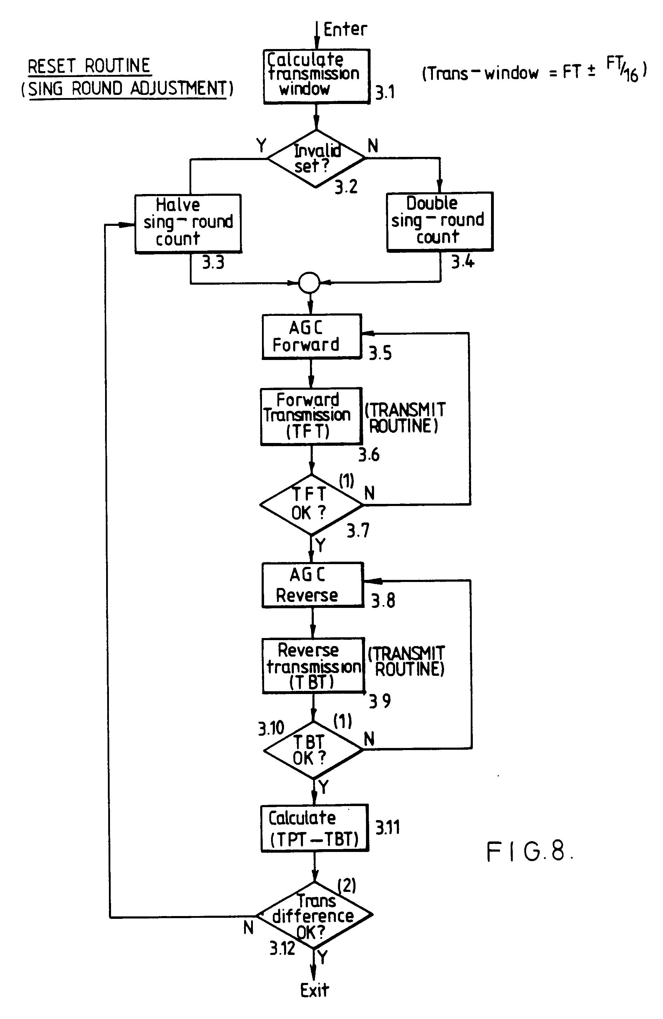

Therefore, the processor is controlled to adjust the number of sing-around times in dependence upon the conditions, so that the most accurate measurement of speed which is allowable in the conditions is obtained. This function is performed by the data gathering routine which will be described with reference by figures 7 and 8.

With reference to figure 7, data is gathered and averaged in blocks of 128 transmission times in both directions, regardless of the sing-around count being used.

On entry to this routine, the invalid flag (see below) is checked to see whether a reduction in sing-around is necessary (step 2.1). If this is not set then the number of sing-around in a transmission is tested to see if this is the maximum allowed (128) (step 2.2), and if not then the processor attempts to increase the sing-around count using the RESET routine (step 2.7) - this operation is described in more detail below, with reference to figure 8. If the number of sing-arounds is already a maximum then no reset occurs, and instead the gain is set in both directions (step 2.3).

Transmission in the forward direction (of the required sing-around count) then takes place, and the total time measured for this is checked against the corresponding previous value. (A change from one value to the next, equivalent to approximately 1 knot is allowed) (steps 2.4-2.6).

If two successive transmission times (for both or either direction) are unacceptable then the invalid flag is set and a reset occurs. This always produces a pair of valid times (i.e both directions).

However, if the transmit time is valid, the same process is performed for the reverse transmission direction in steps 2.8 to 2.10. The data is then added to an accumulator which accumulates the data in both directions in blocks of 128 transmissions, with a completed data block being used for calculating the transit times. In step 2.12 the accumulator is checked to see if a completed data block has been formed. If not, a decision is made at step 2.13 as to whether or not the number of sing-around times should be increased. This decision is made periodically to insure that the number of sing-around times is kept at the highest allowable level, bearing in mind the conditions. If it is decided to increase the number of sing-around transmissions, the RESET routine is called. If not, the transmission routine of steps 2.4 to 2.12 is executed again until a valid data block is complete.

Once a data block is complete the data of the data block is then averaged over the averaging period and the routine is exited.

Within a predetermined time period the data gathering routine is continually called until the period has expired, at which time the data from all the completed data blocks is averaged, and the resulting speed calculated and displayed. This period may preferably vary with speed, from 2 secs at speeds of less than five knots to as little as 0.4 secs for speeds greater than 20 knots.

The NTRNS reset routine, which is called whenever invalid timing data is detected will now be described.

When entering the NTRNS reset routine, a transmission time window, is calculated at step 3.1. The transmission window is based on the average forward transmission time for the previous data block with a tolerance of + or - 1/16 of this time. Following calculation of the window, the invalidity flag is tested to see if the current data is good or bad. If the data is good the routine must have been called from step 2.13 and the sing-around the count is doubled at step 3.4. If the data was bad, the sing-around count is halved at step 3.3. A test transmission is then made which comprises the steps of calling the gain control routine (step 3.5). sending forward transmission at the new sing-around count (step 3.6) and then testing to see if the forward transmission time is within the allowable range specified by the transmission window calculated at step 3.1. If the time is not within the allowable range the gain is readjusted and the transmission is repeated. A similar procedure is then conducted for times in the backward direction (steps 3.8 - 3.10) and the difference between the backward and forward times is then calculated at step 3.11. The transit time difference is then compared to a reference value from the last good data block and if the difference is within an allowable range which is a function of speed and sing-around count (equivalent to 1 to 5 knots approximately), the reset routine with new selected sing-around count is exited. If the difference is not within an allowable range, the sing-around count is halved at step 3.3 and the process repeated until an allowable sing-around count has been obtained.

## Claims

1.  A speed measuring device for measuring the speed of a water craft comprising first and second transducer means (T1,T2) mountable on the water craft below the water line thereof so as to face one another across an acoustic path, transmitter means (140-240) for generating a plurality of consecutive acoustic pulse signals in a given direction with the arrival of an acoustic pulse signal triggering the transmission of the next acoustic pulse signal and energising a selected transducer means for transmission of these acoustic pulse signals along the acoustic path, receiver means (270, 290, 350) for processing the acoustic pulse signals as received at the non-selected transducer means and for determining the arrival time of said acoustic pulse signals, control and processing means (130-139) for controlling the transmitter means to change the selection of the transducer means (T1,T2) so as to change the direction of said transmission and responsive to the transmission means (140-240) and receiver means (270, 290, 350) for processing the transit time of acoustic pulse signals in both directions between the first and second transducer means (T1, T2) for deriving a signal indicative of the speed of the craft, characterized in that the control and processing means (130-139) measures the overall transit time of said plurality of acoustic pulse signals, and in that the number of consecutively generated acoustic pulses, under control of the control and processing means (130-139, 410) is variable according to the water conditions.

2. A speed measuring device as claimed in claim 1 wherein transit times for said pulses are collected in a data block containing a predetermined number of transmit times in both directions.

3. A speed measuring device as claimed in claim 2 wherein the collection of transit times takes place within a time window and the number of data blocks completed in said time window is averaged and processed to provide said signal indicative of the speed of the craft.

4. A speed measuring device as claimed in any one of the preceding claims wherein the control and processing means is operable to check that a measured transit time is within an allowable range and to reduce the number of consecutively generated pulses in a given direction if said transit time data is not within said range.

5. A speed measuring device as claimed in any one of the preceding claims wherein the control and processing means is operable periodically to attempt to increase the number of consecutively generated pulses in a given direction.

6. A speed measuring device as claimed in claim 5 wherein the control and processing means selects the number of consecutively generated pulses to be a power of two.

7. A speed measuring device as claimed in any one of the preceding claims further comprising an automatic gain control circuit (290-350) for receiving a discontinuous oscillating signal, the circuit comprising comparison means (330-350) for comparing the signal with first and second thresholds having a fixed relation, and means for controlling the gain of the oscilllating signal (130, 300-320) so that the first threshold corresponds to a first predetermined point of the received signal, whereby the second threshold corresponds to a second predetermined point of the received signal, said second predetermined point defining a timing marker for said signal and wherein the first and second predeterminded points occur on adjacent half cycles of the oscillating signal, the first predetermined point being the peak value of one of said half cycles and the second predetermined point being chosen to occur on the half cycle of the waveform which exhibits the largest amplitude change relative to the previous like sensed half cycle or waveform perturbation of the discontinuous signal.

8. A speed measuring device as claimed in any one of the preceding claims wherein said transmission means (140-240 comprises a transmission circuit 150-184) comprisng a first terminal having a supply voltage at a first level, a second terminal having a supply voltage at a second level, means for limiting the supply voltage applied to the transducer from said first level to a third level between said first and second levels and switch means for switching the voltage applied to said transducer from said third level to said second level.

9. A speed measuring device as claimed in claim 8 wherein said supply voltage limiting means comprises a zenor diode (170).

10. A speed measuring device as claimed in any one of the preceding claims further comprising a timing circuit 400 comprising clock means (410) arranged to generate pulses at a first frequency, digital processing means (130) able to count input pulses as or below a second frequency lower than said first frequency, prescaling means (430) for accumulating the clock pulses at said first frequency and providing a pulsed output signal of a frequency at or below said second frequency, said output signal being fed to the processing means (130) for counting; and the input of the prescaling means (430) being initiated and terminated in response to a timing operation so that the counted output of the prescaling means provides a measure of the elapsed time between initiation and termination and wherein after termination of the input to the prescaling means, the processing means provides further input pulses to the prescaling means (430) until the output of the prescaling means (430) exhibits a predetermined change of state and counts the number of said further pulses, said count being indicative of the remainder of the clock pulses accumulated in the prescaling means (430) at termination of the timing operation.

**Patentansprüche**

1. Eine Geschwindigkeitsmeßvorrichtung zur Messung der Geschwindigkeit eines Wasserfahrzeuges umfassend: erste und zweite, so an dem Wasserfahrzeug unterhalb dessen Wasserlinie montierbare Wandlermittel (T1, T2), daß sie sich entlang eines akustischen Weges gegenüberstehen, Übertragungsmittel (140-240) zum Erzeugen einer Mehrzahl aufeinanderfolgender, akustischer Pulssignale in eine vorgegebene Richtung, wobei die Ankunft eines akustischen Pulssignals die Aussendung des nächsten akustischen Pulssignals auslöst, und Betätigen eines ausgewählten Wandlermittels zur Übertragung dieser akustischen Pulssignale entlang des akustischen Weges, Empfangsmittel (270, 290, 350) zur Verarbeitung der akustischen Pulssignale, so wie sie bei dem nicht ausgewählten Wandlermittel empfangen werden, und zur Bestimmung der Ankunftszeit dieser akustischen Pulssignale, Steuer- und Verarbeitungsmittel (130-139) zur Steuerung der Übertragungsmittel, um die Auswahl der Wandlermittel (T1, T2) zu ändern, um die Richtung dieser Übertragung zu ändern und in Abhängigkeit von den Übertragungsmitteln (140-240) und Empfangsmitteln (270, 290, 350) zur Verarbeitung der Durchgangszeit von akustischen Pulssignalen in beide Richtungen zwischen den ersten und zweiten Wandlermitteln (T1, T2), um ein die Geschwindigkeit des Fahrzeugs anzeigendes Signal abzuleiten, dadurch gekennzeichnet, daß die Steuer- und Verarbeitungsmittel (130-139) die Gesamtdurchgangszeit der Mehrzahl der akustischen Pulssignale messen, und daß die Anzahl der aufeinanderfolgend erzeugten akustischen Pulse unter Steuerung der Steuer- und Verarbeitungsmittel (130-139, 410) gemäß den Wasserbedingungen variabel ist.

2. Eine Geschwindigkeitsmeßvorrichtung nach Anspruch 1, bei der die Durchgangszeiten der besagten Pulse in einem Datenblock gesammelt werden, der eine vorbestimmte Anzahl von Übertragungszeiten in beide Richtungen enthält.

3. Eine Geschwindigkeitsmeßvorrichtung nach Anspruch 2, bei der die Ansammlung der Durchgangszeiten innerhalb eines Zeitfensters stattfindet und die Anzahl der Datenblocks, die in diesem Zeitfenster vervollständigt werden, gemittelt und verarbeitet wird, um dieses, die Geschwindigkeit des Fahrzeuges anzeigende Signal vorzusehen.

4. Eine Geschwindigkeitsmeßvorrichtung nach einem der voranstehenden Ansprüche, bei der die Steuer- und Verarbeitungsmittel betreibbar sind, um zu überprüfen, ob eine gemessene Durchgangszeit innerhalb eines erlaubten Bereichs ist, und die Anzahl der aufeinanderfolgend erzeugten Pulse in eine gegebene Richtung zu reduzieren, wenn diese Durchgangszeitdaten nicht in diesem Bereich sind.

5. Eine Geschwindigkeitsmeßvorrichtung nach einem der voranstehenden Ansprüche, bei der das Steuer- und Verarbeitungsmittel betreibbar ist, um periodisch zu versuchen, die Anzahl der aufeinanderfolgend erzeugten Pulse in eine gegebene Richtung zu erhöhen.

6. Eine Geschwindigkeitsmeßvorrichtung nach Anspruch 5, bei der das Steuer- und Verarbeitungsmittel die Anzahl der aufeinanderfolgend erzeugten Pulse als eine Potenz von zwei auswählt.

7. Eine Geschwindigkeitsmeßvorrichtung nach einem der voranstehenden Ansprüche, ferner umfassend: eine automatische Verstärkungssteuerungsschaltung (290-350) zum Empfangen eines diskontinuierlichen, oszillierenden Signals, wobei die Schaltung Vergleichsmittel (330-350) zum Vergleichen des Signals mit ersten und zweiten Schwellen, die eine feste Beziehung aufweisen, umfaßt, und Mittel zur Steuerung der Verstärkung des oszillierenden Signals (130, 300-320), so daß die erste Schwelle einem ersten, vorbestimmten Punkt des empfangenden Signals entspricht, so daß die zweite Schwelle einem zweiten, vorherbestimmten Punkt des empfangenen Signals entspricht, wobei der zweite vorherbestimmte Punkt eine Zeiteinstellungsmarke für das Signal definiert und bei dem die ersten und zweiten vorherbestimmten Punkte an benachbarten Halbwellen des oszillierenden Signals vorkommen, wobei der erste, vorherbestimmte Punkt der Spitzenwert einer dieser Halbwellen ist und der zweite, vorherbestimmte Punkt so ausgewählt ist, daß er bei der Halbwelle der Wellenform vorkommt, die die größte Amplitudenänderung in bezug auf die zuvor ähnlich abgefühlte Halbwelle oder Wellenformstörung des diskontinuierlichen Signals zeigt.

8. Eine Geschwindigkeitsmeßvorrichtung nach einem der voranstehenden Ansprüche, bei dem das Übertragungsmittel (140-240) eine Übertragungsschaltung (150-184) umfaßt, mit einer ersten, eine Versorgungsspannung von einer ersten Höhe aufweisende Klemme, mit einer zweiten, eine Versorgungsspannung von einer zweiten Höhe aufweisende Klemme, mit Mitteln zur Begrenzung der Versorgungsspannung, die an den Wandler von dieser ersten Höhe auf eine dritte Höhe zwischen der ersten und zweiten Höhe angelegt wird, und mit Schaltmitteln zum Schalten der an den Wandler von dieser dritten Höhe auf diese zweite Höhe angelegten Spannung.

9. Eine Geschwindigkeitsmeßvorrichtung nach Anspruch 8, bei der die Versorgungsspannung-Begrenzungsmittel, eine Zenerdiode (170) umfassen.

10. Eine Geschwindigkeitsmeßvorrichtung nach einem der voranstehenden Ansprüche, ferner umfassend: eine Zeiteinstellschaltung (400) mit Uhrenmitteln (410), die zum Erzeugen von Pulsen einer ersten Frequenz angeordnet sind, mit digitalen Verarbeitungsmitteln (130), zum Zählen der Eingabepulse bei oder unter einer zweiten Frequenz, niedriger als die erste Frequenz, mit voreinstellenden Mitteln (430) zum Akkumulieren der Uhrenpulse bei der ersten Frequenz und zum Vorsehen eines gepulsten Ausgabesignals einer Frequenz bei oder unterhalb dieser zweiten Frequenz, wobei dieses Ausgabesignal den Verarbeitungsmitteln (130) zum Zählen zugeführt wird; und wobei die Eingabe der voreinstellenden Mittel (430) in Abhängigkeit von einer zeiteinstellenden Betätigung in Gang gesetzt und beendet wird, so daß die gezählte Ausgabe der voreinstellenden Mittel eine Messung der zwischen dem Ingangsetzen und der Beendigung vergangenen Zeit vermittelt, und bei dem nach der Beendigung der Eingabe an die voreinstellenden Mittel das verarbeitende Mittel ferner Eingabepulse an das voreinstellende Mittel (430) vermittelt, bis die Ausgabe der voreinstellenden Mittel (430) eine vorherbestimmte Änderung des Status zeigt und die Anzahl dieser weiteren Pulse zählt, wobei diese Zählung anzeigend für den Rest der Uhrenpulse ist, die in dem voreinstellenden Mittel (430) bei Beendigung der Zeiteinstellbetätigung akkumuliert sind.

**Revendications**

1. Dispositif de mesure de vitesse pour mesurer la vitesse d'un navire, comprenant des premier et second moyens de transducteurs (T1, T2) que l'on peut monter sur le navire en dessous de la ligne de flottaison de ce dernier pour qu'ils soient mutuellement opposés de part et d'autre d'une voie acoustique, des moyens de transmetteurs (140-240) pour générer plusieurs signaux consécutifs à impulsions acoustiques dans une direction donnée, l'arrivée d'un signal à impulsions acoustiques déclenchant la transmission du signal à impulsions acoustiques suivant et pour exciter un moyen de transducteur sélectionné pour la transmission de ces signaux à impulsions acoustiques le long de la voie acoustique, des moyens de récepteurs (270, 290, 350) pour traiter les signaux à impulsions acoustiques tels que reçus au moyen de transducteur non sélectionné et pour déterminer le temps d'arrivée desdits signaux à impulsions acoustiques, un moyen de commande et de traitement (130-139) pour donner l'ordre aux moyens de transmetteurs de modifier la sélection des moyens de transducteurs (T1, T2) de façon à modifier la direction de ladite transmission et, en réponse aux moyens de transmission (140-240) et aux moyens de récepteurs (270, 290, 350), pour traiter le temps de transit mis par les signaux à impulsions acoustiques pour passer dans les deux directions du premier moyen de transducteur au second (T1, T2) dans le but de dériver un signal indicateur de la vitesse du navire, caractérisé en ce que le moyen de commande et de traitement (130-139) mesure le temps de transit total desdits plusieurs signaux à impulsions acoustiques et en ce que le nombre d'impulsions acoustiques générées de manière consécutive, sous le contrôle du moyen de commande et de traitement (130-139, 410), est variable en fonction des conditions de l'eau.

2. Dispositif de mesure de vitesse selon la revendication 1, dans lequel on récolte les temps de transit pour lesdites impulsions dans un bloc de données contenant un nombre prédéterminé de temps de transit dans les deux directions.

3. Dispositif de mesure de vitesse selon la revendication 2, dans lequel la récolte des temps de transit a lieu à l'intérieur d'une fenêtre temporelle et, pour procurer ledit signal indicateur de la vitesse du navire, on fait la moyenne du nombre de blocs de données complétés dans ladite fenêtre temporelle et on les traite.

4. Dispositif de mesure de vitesse selon l'une quelconque des revendications précédentes, dans lequel on peut mettre en service le moyen de commande et de traitement pour vérifier le fait qu'un temps de transit mesuré se situe au sein d'un intervalle permissible et pour réduire le nombre d'impulsions générées de manière consécutive dans une direction donnée au cas où lesdites données de temps de transit ne se situent pas au sein dudit intervalle.

5. Dispositif de mesure de vitesse selon l'une quelconque des revendications précédentes, dans lequel on peut mettre en service le moyen de commande et de traitement de manière périodique pour tenter d'augmenter le nombre d'impulsions générées de manière consécutive dans une direction donnée.

6. Dispositif de mesure de vitesse selon la revendication 5, dans lequel le moyen de commande et de traitement sélectionne le nombre d'impulsions générées de manière consécutive comme étant une puissance de deux.

7. Dispositif de mesure de vitesse selon l'une quelconque des revendications précédentes, comprenant, en outre, un circuit de commande automatique de gain (290-350) pour recevoir un signal oscillant discontinu, le circuit comprenant un moyen de comparaison (330-350) pour comparer le signal à des premier et second seuils à relation fixe, ainsi qu'un moyen pour régler le gain du signai oscillant (130, 300-320) de telle sorte que le premier seuil corresponde à un premier point prédéterminé du signal reçu, le second seuil correspondant à un second point prédéterminé du signal reçu, ledit second point prédéterminé définissant un repère de synchronisation pour ledit signal, et dispositif dans lequel les premier et second points prédéterminés apparaissent sur des demi-périodes adjacentes du signal oscillant, le premier point prédéterminé concernant la valeur maximale de l'une desdites demi-périodes et le second point prédéterminé étant choisi pour apparaître sur la demi-période de l'onde qui manifeste le plus grand changement d'amplitude par rapport à la perturbation précédente de demi-période ou d'onde pareillement détectée quant au signal discontinu.

8. Dispositif de mesure de vitesse selon l'une quelconque des revendications précédentes, dans lequel ledit moyen de transmission (140-240) comprend un circuit de transmission (150-184) comprenant une première borne dont la tension d'alimentation se situe à un premier niveau, une seconde borne dont la tension d'alimentation se situe à un second niveau, un moyen pour limiter la tension d'alimentation appliquée au transducteur en partant dudit premier niveau pour atteindre un troisième niveau situé entre lesdits premier et second niveaux, ainsi qu'un moyen de commutateur pour commuter la tension appliquée audit transducteur en la faisant passer dudit troisième niveau audit second niveau.

9. Dispositif de mesure de vitesse selon la revendication 8, dans lequel ledit moyen de limitation de tension d'alimentation comprend une diode Zéner (170).

10. Dispositif de mesure de vitesse selon l'une quelconque des revendications précédentes, comprenant, en outre, un circuit de synchronisation (400) comprenant un moyen d'horloge (410) conçu pour générer des impulsions à une première fréquence, un moyen de traitement numérique (130) capable de compter des impulsions d'entrée affectées d'une fréquence égale ou inférieure à une seconde fréquence inférieure à ladite première fréquence, un moyen d'évaluation préalable (430) pour accumuler les impulsions d'horloge à ladite première fréquence et pour procurer un signal de sortie à impulsions dont la fréquence est égale ou inférieure à ladite seconde fréquence, ledit signal de sortie étant acheminé au moyen de traitement (130) à des fins de comptage; et l'entrée du moyen d'évaluation préalable (430) débutant et finissant en réponse à une opération de synchronisation, si bien que la sortie comptée du moyen d'évaluation préalable procure une mesure du temps qui s'est déroulé entre le début et la fin, et dispositif dans lequel, à la fin de l'entrée du moyen d'évaluation préalable, le moyen de traitement procure d'autres impulsions d'entrée au moyen d'évaluation préalable (430) jusqu'à ce que la sortie du moyen d'évaluation préalable (430) manifeste un changement d'état prédéterminé et compte le nombre desdites autres impulsions, ledit nombre étant indicatif du reste des impulsions d'horloge accumulées dans le moyen d'évaluation préalable (430) à la fin de l'opération de synchronisation.

F I G.1.

F I G. 2.

FIG.3.

EP 0 272 942 B1

AUTOMATIC GAIN CONTROL (AGC) ROUTINE

FIG.4.

FIG 5a

FIG.5b.

FIG.5c.

FIG.5d.

FIG.5e.

F I G.6.

DATA GATHERING ROUTINE

Begin

Invalid Set? 2.1

N

NTRNS a max? 2.2

N

Y

Set gain in Both directions 2.3

Forward Transmission 2.4 (TRANSMIT ROUTINE)

Check Transmission Time 2.5

Invalid set ? 2.6

N

Reverse Transmission 2.8 (TRANSMIT ROUTINE)

Check Transmission Time 2.9

Invalid Set ? 2.10

Y

N

Add Transmission times to sum 2.11

Data Block complete ? 2.12

N

Y

Increase NTRNS ? 2.13

N

Y

Reset NTRNS Get valid transmission data 2.7

Sum data over averaging period 2.14

End

FIG.7.

RESET ROUTINE
(SING ROUND ADJUSTMENT)

Enter

Calculate transmission window    3.1

(Trans-window = FT ± $\frac{FT}{16}$)

Invalid set?    3.2

Y    N

Halve sing-round count    3.3

Double sing-round count    3.4

AGC Forward    3.5

Forward Transmission (TFT)    (TRANSMIT ROUTINE)    3.6

TFT OK?    (1)    N    3.7

Y

AGC Reverse    3.8

Reverse transmission (TBT)    (TRANSMIT ROUTINE)    3.9

3.10    TBT OK?    (1)    N

Y

Calculate (TPT−TBT)    3.11

Trans difference OK?    (2)    N    3.12

Y

Exit

FIG.8.

18